## Europäisches Patentamt
## European Patent Office
## Office européen des brevets

(19)

(11) Veröffentlichungsnummer: **0 024 576**
**B1**

(12) **EUROPÄISCHE PATENTSCHRIFT**

(45) Veröffentlichungstag der Patentschrift: **25.07.84**

(51) Int. Cl.³: **H 01 S 3/097**

(21) Anmeldenummer: **80104549.3**

(22) Anmeldetag: **31.07.80**

(54) **Vorrichtung zur Erzeugung schneller gepulster Entladungen in einem Laser, insbesondere an Hochenergielasern.**

(30) Priorität: **13.08.79 DE 2932781**

(43) Veröffentlichungstag der Anmeldung:
**11.03.81 Patentblatt 81/10**

(45) Bekanntmachung des Hinweises auf die Patenterteilung:
**25.07.84 Patentblatt 84/30**

(84) Benannte Vertragsstaaten:
**AT CH FR GB IT LI NL SE**

(56) Entgegenhaltungen:
**GB - A - 1 536 255**
**US - A - 4 077 020**
**US - A - 4 093 927**

**JOURNAL OF PHYSICS E. SCIENTIFIC INSTRUMENTS 1977, Band 10, H.M. BERGMAN, A.J. PENDEUIS: "Miniaturized Atmospheric Pressure Nitrogen Laser", Seiten 602-604**

(73) Patentinhaber: **KRAFTWERK UNION AKTIENGESELLSCHAFT**
**Wiesenstrasse 35**
**D-4330 Mülheim (Ruhr) (DE)**

(72) Erfinder: **Cirkel, Hans-Jürgen, Dr.**
**Anderlohrstrasse 1**
**D-8520 Erlangen (DE)**
Erfinder: **Bette, Willi**
**Penzoldtstrasse 5**
**D-8520 Erlangen (DE)**

(74) Vertreter: **Mehl, Ernst, Dipl.-Ing. et al,**
**Postfach 22 01 76**
**D-8000 München 22 (DE)**

Courier Press, Leamington Spa, England.

## Beschreibung

Die Erfindung bezieht sich auf eine Vorrichtung zur Erzeugung schneller gepulster Entladungen in einem Laser, insbesondere an Hochenergielasern, gemäß Oberbegriff des Anspruchs 1.

Eine solche Vorrichtung ist durch die US—A—4 093 927 (1) im wesentlichen bekannt. Dieser gepulste Gaslaser besteht aus einem Paket gestapelter erster und zweiter Bandleiterkondensatoren mit dielektrischen isolierenden Platten (boards), welche mittige Öffnungen zum Hindurchschicken der Laserstrahlung aufweisen, wobei die optische Achse des Lasers in Stapelrichtung verläuft. Im Betrieb wandert der Laserimpuls in Richtung der optischen Achse. Dies wird erreicht durch Einzelüberschläge zwischen den einander gegenüberliegenden Elektrodenkanten 14, gebildet durch Anspitzen der Kondensatorbeläge 12a, 12b, und durch die Erzeugung einer elektrischen Wanderwelle entlang der optischen Achse (uniform sheet-like glow discharge between edges 14). Einen solchen fortschreitenden Laserimpuls kann man durch optisch aktivierbare Schalter (Funkenstrecken) erreichen, die nacheinander gezündet werden.

Bei dieser bekannten Vorrichtung ist die für die Gasentladung zur Verfügung stehende Elektrodenfläche relativ klein, bedingt durch die einander abwechselnden Schichten der Elektrodenbleche (die zugleich Kondensatorbeläge sind), der dielektrischen Zwischenlagen und der Kondensatorbeläge, und bedingt durch die Anspitzung der Elektrodenbleche in Richtung auf die Laserkammer, welche einen relativ kleinen Rechteckquerschnitt und deshalb nur ein begrenztes Entladungsvolumen aufweist, Des weiteren wechseln sich bei der bekannten Vorrichtung in Stapelrichtung gesehen Plus- und Minus-Potentialbeläge ab, so daß entsprechend starke Isolierstoff-Zwischenlagen vergesehen werden müssen.

Bei einer anderen bekannten Vorrichtung für einen Hochenergielaser nach der GB—A—1 536 255 (2), entsprechend der DE—A—26 36 177, die allerdings erste und zweite Bandleiterkondensatoren nicht aufweist, ist das Laserrohr in den Zwischenraum eines Kondensatorstapels eingebaut, der durch im Querschnitt maulförmige, einander mit Abstand gegenüberliegende Beläge gebildet ist. In das Laserrohr ragen eine oder mehrere Hilfselektroden, die mit einem extern an eine Hochspannungsquelle anzuschließenden Bandkondensator verbunden sind. Es handelt sich dabei um einen einzigen Plattenkondensator mit laserachsquer verlaufenden und laserachsparallel gestapelten Platten und um ein damit kombiniertes Laserrohr mit eingebauter Schaltstrecke. Dabei sind Schaltstrecke und Laser-Entladungsraum in einem gemeinsamen Gehäuse integriert. Der zur Auslösung dienende Schalter liegt in Reihe mit der Laser-Entladungsstrecke, so daß der Spannungsabfall am Schalter für die Spannung am Laser verloren ist. Die maximale Spannung an den Laserelektroden ist die Ladespannung des Kondensators. Die Streuinduktivität dieser bekannten Vorrichtung ist wegen der nicht kompensierten Stromwege relativ hoch, so daß eine Anregung von Lasersystemen (z. B. von Excimer-Lasern oder $N_2$-Lasern), die Anregungsimpulse mit einer hohen Stromanstiegsgeschwindigkeit und kurzer Spannungsanstiegszeit bei gleichzeitig hoher Kapazität erfordern, nicht möglich ist. Diese bekannte Vorrichtung eines transversal angeregten Lasers, die an sich einen einfachen, kompakten Aufbau aufweist, ist zwar insbesondere zur Erzeugung von Einzelimpulsen hoher Spitzenleistung und hoher Energiedichte geeignet, sie stellt jedoch kein Anregungssystem für eine schnelle oder extrem schnelle gepulste Entladung bei gleichzeitig hoher Kapazität dar.

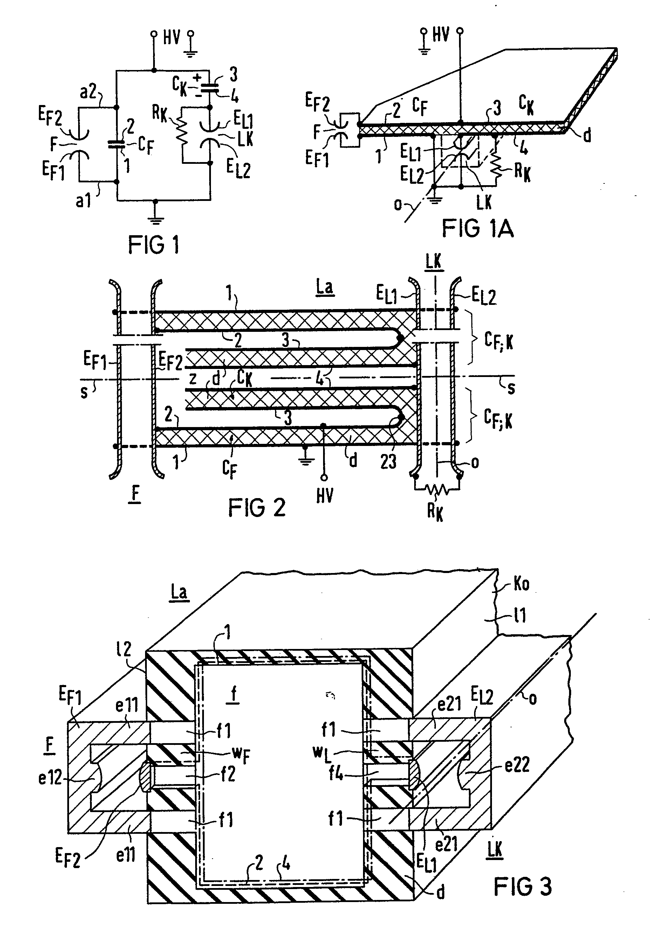

Zum Stand der Technik ist ferner zu verweisen auf sogenannte ebene Laseranordnungen nach dem TEA-Prinzip, siehe "Applied Physics Letters", Band 10, Nr. 1. Jan. 1967, S. 3 und 4, insbesondere Fig. 1 (3). TEA-Laser (transversely excited atmospherie pressure laser) haben aufgrund ihrer hohen Spitzenleistungen und kurzen Impulsdauern besondere Bedeutung erlangt. Bei diesen Lasern wird das im Vergleich zu den longitudinal angeregten Gaslasern (HeNe-Laser) unter hohen Drucken (50 mbar bis mehrere bar) stehende Lasergas durch eine homogene elektrische Entladung bei mehreren Kilovolt über zwei ausgedehnte Elektroden angeregt, die sich gegenüberliegend, parallel zur optischen Achse—der Emissionsrichtung des Lasers—angebracht sind.

Als Beispiel für den genannten Lasertyp sind im infraroten Spektralbereich der $CO_2$-Laser, für das sichtbare Spektrum bzw. für das nahe UV der $N_2$-Laser und die Excimer-Laser zu nennen. Zur Definition des Excimer-Lasers siehe z. B. "Physics Today", Mai 1978, Seiten 32 bis 39, insbesondere linke und mittlere Spalte auf Seite 32 (4). Bei den TEA-Lasern tendiert die zunächst homogene elektrische Entladung allerdings dazu, in einzelne Funkenkanäle zu entarten, die das Abbrechen der Laseremission und die Zerstörung der Elektroden zur Folge haben können. Aus diesen Gründen ist es erforderlich, TEA-Laser mit Hochspannungsimpulsen hoher Stromstärke und kurzer Halbwertsbreite zu fahren. Aus der wissenschaftlichen Literatur sind mehrere Systeme bekannt, die diesen anforderungen genügen, siehe außer den genannten beiden Literaturstellen (3), (4) noch "Physical Review Letters", Band 25, Nr. 8, 1970, Seiten 491 bis 497 (5) und "Applied Physics Letters", Band 29, Nr. 11, 1976, Seiten 707 bis 709 (6).

Zur Erzielung der nötigen kurzen Anstiegszeiten für die Hochspannungsimpulse müssen Kondensatoren mit extrem niedriger Eigeninduktivität und Zuleitungsinduktivität eingesetzt werden. Hierzu eignen sich Bandleiterkondensatoren, wie sie unter (3) abgebildet sind. Der Nachteil dieser Kondensatoren liegt in ihrem geringen Kapazitätsbelag. Eine Verlängerung der Kondensatorbandleiter bringt neben der gewünschten Kapazitätsvergrößerung auch eine Induktivitätserhöhung mit sich, die die Eigenfrequenz des entsprechenden Schwingkreises erniedrigt und damit die Anstiegszeiten des Hochspannungsimpulses auf einen unzulässigen Wert erhöht. Somit ist die in den Kondensatoren bei einer festen Spannung speicherbare elektrische Energie, die dem Lasergas maximal zugeführt werden kann, auf einen relativ niedrigen Wert begrenzt. Eine Erhöhung der Energie wäre an sich nur möglich durch eine Erhöhung der Spannung. Dieser Weg würde aber wegen der damit verbundenen Isolationsprobleme zu größeren Abständen zwischen den spannungsführenden Teilen und damit zu einer Induktivitätserhöhung führen, die nur durch eine Verringerung der effektiven Kapazität kompensiert werden könnte. Eine wesentliche Erschwernis bringt in diesem Zusammenhang der Einsatz schneller Schalter für hohe Spannungen mit sich.

Der erfindung liegt die Aufgabe zugrunde, unter Vermeidung der geschilderten, den bekannten Vorrichtungen nach (1) bis (3) innewohnenden Nachteile eine Vorrichtung der im Oberbegriff des Anspruchs 1 definierten Aufbauform zu schaffen, mit welcher der Energieinhalt des Hochspannungsimpulses bei konstanter Ladespannung vergrößert werden kann. Die hierzu vorgenommene Vergrößerung der Kapazität des Kondensators soll gleichzeitig eine Verringerung der Eigeninduktivität des Kondensators und der der Zuleitungen zum Laser zulassen.

Erfindungsgemäß wird die gestellte Aufgabe bei einer Vorrichtung gemäß Gattungsbegriff durch die im Kennzeichen des Anspruchs 1 aufgeführten Merkmale gelöst. Die mit der Erfindung erzielbaren Vorteile sind vor allem darin zu sehen, daß sich der Energieinhalt der Hochspannungsimpulse bei konstanter Ladespannung im Vergleich zu den bekannten Vorrichtungen wesentlich vergrößert, ohne daß ein entsprechender Ansteig der Eigeninduktivität des Kondensators und damit eine daraus resultierende Verlängerung der Schaltzeiten in Kauf genommen werden müßte. Die Inducktivität pro Kapazitätseinheit H/F wird sogar kleiner. Sowohl die Kapazität der ersten und zweiten Bandleiter - Einzelkondensatoren (Kapazitätseinheit)als auch ihre Anzahl n im Stapel kann variiert werden. Weiterhin ist es möglich, die Induktivität der Kontaktierungen einer Einzelplatte in gewissen Bereichen vorzugeben. All diese Variationsmöglichkeiten lassen eine optimale Anpassung des durch das system gebildeten elektrischen Schaltkreises an die physikalischen Parameter der Gasentladungsstrecke zu, die sich zwischen den Elektroden der Laserkammer ausbildet. In den Unteransprüchen beschriebene Weiterbildungen des Erfindungsgegenstandes betreffen die Ausbildung der Laserkammer, ihrer schnellen Hochspannungsschaltstrecke und den Aufbau des Kondensators. Letzterer kann zwecks Ezielung hoher Leistungsdichten aus Edelstahlplatten mit Wasser als Dielektrikum bestehen.

Im folgenden wird anhand der Zeichnung, in der mehrere Ausführungsbeispiele des Erfindungsgegenstandes dargestellt sind, dieser noch näher erläutert.

Es zeigt in schematischer und vereinfachter Darstellung:

Fig. 1 eine Blümlein-Schaltung, wie sie dem Stand der Technik zur Erzeugung der Laseranregungsimpulse zu entnehmen ist;

Fig. 1a den Gegenstand nach Fig. 1, des besseren Verständnisses wegen zum Teil in eine räumliche Anordnung transponiert;

Fig. 2 ein erstes Ausführungsbeispiel für eine Vorrichtung nach der Erfindung in einem Axialschnitt, wobei lediglich zwei Kapazitätseinheiten, jeweils bestehend aus dem ersten und zweiten Bandleiterkondensator, dargestellt sind;

Fig. 3 den Gegenstand nach Fig. 2 in perspektivischer Darstellung;

Fig. 4 einen sogenannten Charge-Transfer-Kreis, wie er als Alternative zur Blümlein-Schaltung dem Stand der Technik zur Erzeugung der Laseranregungsimpulse zu entnehmen ist;

Fig. 4a den Gegenstand nach Fig. 4, zum besseren Verständnis zum Teil in eine räumliche Anordnung transponiert;

Fig. 5 ein zweites Ausführungsbeispiel für eine Vorrichtung nach der Erfindung unter Zugrundelegung einer Charge-Transfer-Schaltung nach Fig. 4;

Fig. 6 eine schnelle Hochspannungs-Schaltstrecke, bei der in eine Elektrode Triggerstifte eingefügt sind und die sich mit Vorteil für die Ausführungsbeispiele verwenden läßt;

Fig. 7 eine vorteilhafte Schaltung zur Erzeugung der Hochspannungsimpulse für eine schnelle Hochspannungs-Schaltstrecke nach Fig. 6;

Fig. 8 ein drittes Ausführungsbeispiel für eine Vorrichtung nach der Erfindung mit einer aus n einander parallel geschalteten Thyratrons gebildeten schnellen Hochspannungs-Schaltstrecke, wobei eine Blümlein-Schaltung so wie beim ersten Ausführungsbeispiel nach Figuren 2 und 3 zugrunde gelegt ist;

Fig. 9 in entsprechender Darstellung zu Figuren 2 und 5 ein viertes Ausführungsbeispiel für eine Vorrichtung nach der Erfindung, bei dem alle Kondensatorbelege ungefaltet planparallel angeordnet sind und die Laserkammer diese in einem Durchbruch durchdringt, wobei eine Blümlein-Schaltung zugrunde gelegt ist;

Fig. 10 eine perspektivische Darstellung für den Gegenstand nach Fig. 9; und

Fig. 11 ein fünftes Ausführungsbeispiel ähnlich dem nach Figur 2, bei dem eine Flüssigkeit, vorzugsweise Wasser, als Dielektrikum verwendet wird.

Die Blümlein-Schaltung nach Fig. 1 symbolisiert eine Laserkammer LK mit den beiden Elektroden $E_{L1}$ und $E_{L2}$ une eine schnelle Hochspannungs-Schaltstrecke in Form einer Funkenstrecke F mit den beiden Elektroden $E_{F1}$ und $E_{F2}$. Die Funkenstrecke F dient mit der noch erläuterten Beschaltung zur Zündung der Gasentladung bzw. zum Anlegen eines Hochspannungsimpulses zwischen die Elektroden $E_{L1}$ und $E_{L2}$ der Laserkammer LK. Parallel zur Funkenstrecke F ist der erste induktionsarme Bandleiterkondensator $C_F$ geschaltet, dessen Beläge 1, 2 über möglichst induktionsarme Anschlußfahnen a1, a2 an die Funkenstrecke F angeschlossen sind. In Reihe zur Laserkammer LK ist der zweite induktionsarme Bandleiter-Kondensator $C_K$ angeschlossen, wobei die beiden Beläge 2 und 3 der Kondensatoren $C_F$ und $C_K$ miteinander verbunden und an das hochliegende Potential einer Hochspannungsquelle HV gelegt sind. Auf der Seite des Erdpotentials sind die Elektroden $E_{F1}$ der Funkenstrecke F und $E_{L2}$ der Laserkammer LK sowie der Belag 1 des ersten Kondensators $C_F$ miteinander verbunden und an das Erdpotential angeschlossen. Die Elektrode $E_{L1}$ der Laserkammer LK bzw. der Belag 4 des zweiten Kondensators $C_K$ sind über einen hochohmigen Widerstand, der hochohmig im Vergleich zum Widerstandswert des gezündeten Plasmas ist, an Erdpotential gelegt.

Gemäß Fig. 1a ist die Schaltung nach Fig. 1 in eine räumliche Bandleiterkondensator-Anordnung transponiert, welche der Darstellung in Fig. 1 der Literaturstelle (3) oder derjenigen nach Fig. 1 der DE—AS 21 35 109 (7) sehr ähnlich ist, wobei das Dielektrikum zwischen den Belägen 1, 2; 3, 4 mit d bezeichnet ist.

Die Wirkungsweise der Schaltung nach Fig. 1, 1a ist wie folgt. Die Kondensatoren $C_F$ und $C_K$ sind auf die Hochspannung HV aufgeladen. Die Laserkammer LK liegt dabei über den hochohmigen Widerstand $R_K$ auf Erdpotential. Nach Schließen des Schalters F (Zünden der Funkenstrecke) baut sich eine Hochspannung zwischen den Elektroden der Laserkammer auf, und es erfolgt der Spannungsdurchbruch, wobei das Lasergas zur Emission angeregt wird. Als geeignete Hochspannungsschaltstrecken kommen außer Funkenstrecken F auch Thyratrons in Frage. Die Erfindung geht aus von dem in Fig. 1, 1a dargestellten Anregungssystem für schnelle gepulste Gasentladung, welches für einen Hochenergielaser des TEA-Typs ausgebildet ist. Die Anregung innerhalb der Laserkammer LK erfolgt dabei durch möglichst homogene lichtbogenfreie Kondensatorentladung zwischen den beiden parallel zur optischen Achse o des Lasers La sich erstreckenden und mit Abstand einander gegenüberliegenden Elektroden $E_{L1}$ und $E_{L2}$. Die ersten und zweiten Bandleiterkondensatoren $C_F$ und $C_K$ dienen dabei zur Induktionsarmen Energiespeicherung und Kontaktierung der Laserelektroden $E_{L1}$, $E_{L2}$ und der zugehörigen Hochspannungsschaltstrecke F mit den Elektroden $E_{F1}$ und $E_{F2}$, die das Anlegen eines Hochspannungsimpulses an die Laserelektroden bewirkt.

Bei dem in Fig. 2 und 3 dargestellten ersten Ausführungsbeispiel der Erfindung ist nun im Gegensatz zu Fig. 1a die Anordnung so getroffen, daß die Beläge 1 bis 4 der ersten und zweiten Bandleiterkondensatoren $C_F$ und $C_K$ und ihre dazwischenliegenden dielektrischen Schichten d im wesentlichen normal zur optischen Achse o des lasers La verlaufen. Weiterhin sind die Beläge 1 bis 4 im wesentlichen parallel zur optischen Achse o des Lasers La zu einem Kondensatorpaket gestapelt und mit seitlich herausgeführten Anschlußfahnen, die generell mit f bezeichnet sind, an die Elektroden $E_{L1}$ und $E_{L2}$ der Laserkammer LK angeschlossen. Die Bandleiterkondensatoren $C_F$ und $C_K$ sind also um 90° zur optischen Achse o des Lasers La gekippt, dadurch können n kleinste gemeinschaftliche Kapazitätseinheiten $C_{F,K}$ laserachsparallel gestapelt bzw. hintereinander an der Laserkammer LK kontaktiert werden. Die Laserkammer LK und die im folgenden abgekürzt als Schaltstrecke F bezeichnete Schnelle Hochspannungsschaltstrecke sind im Vergleich zur Darstellung nach Fig. 3 lediglich schematisch als rohrförmige Körper dargestellt; eine einfache konstruktive Ausführung zeigt die perspektivische Darstellung nach Fig. 3. Bei der Schaltstrecke F kann es sich um eine Vielkanal-Funkenstrecke mit entsprechend zur Laserkammer laserachsparallel sich erstreckenden Elektroden $E_{F1}$, $E_{F2}$ handeln; diese Schaltstrecke F kann jedoch, wie weiter unten noch erläutert, auch durch schnellschaltende Thyratrons verwirklicht werden. Durch Vergleich der Figuren 1, 1a und der Figur 2 stellt man fest, daß dem Anregungssystem nach Fig. 2 gleichfalls eine Blümlein-Schaltung zugrunde liegt. Demgemäß sond die Beläge des ersten und des zweiten Bandleiterkondensators $C_F$ und $C_K$ mit den gleichen Bezugszeichen 1, 2, 3, 4 wie in Fig. 1 bezeichnet. Die dielektrischen Schichten d sind jeweils zwischen den Belägen 1, 2 bzw. 3, 4 angeordnet, die während des Betriebes auf unterschiedlichem Hochspannungspotential liegen. Im Zwischenraum z zwischen den beiden Kapazitätseinheiten $C_{F,K}$ könnten die Beläge 4,4, und 2,3, da sie auf gleichem Potential liegen auch baulich miteinander zu einem einzigen Belag vereinigt sein. Eine integrierte Ausbildung der Beläge 4,4 und 2,3 kommt insbesondere dann in Frage, wenn ein flüssiges Dielektrikum, z.B. chemisch reines Wasser, verwendet wird. Diese Variante wird anhand von Fig. 11 weiter unten erläutert.

Im einzelnen ist in Fig. 2 der Belag 1 des Bandleiterkondensators $C_F$ mit der Elektrode $E_{F1}$ der Schaltstrecke und mit $E_{L2}$ der Laserkammer LK kontaktiert, und er liegt auf Erdpotential. Der Belag 2 des Bandleiterkondensators $C_F$ ist mit der Elektrode $E_{F2}$ der Schaltstrecke F und mit dem Belag 3 des Bandleiterkondensators $C_K$

kontaktiert und liegt auf hohem Potential, nämlich dem der Hochspannungsquelle HV. Der Belag 4 des Kondensators $C_K$ ist mit der Elektrode $E_{L1}$ der Laserkammer LK verbunden, die über einem hochohmigen Widerstand $R_K$ oder eine Induktivität mit der Elektrode $E_{L2}$ verbunden ist, die auf Erdpotential liegt. Wie erwähnt, können n mal diese Anordnungen parallel zueinander und mit den Belägen in zur Laserachse o normalen Ebenen liegend an der Laserkammer LK und an der Schaltstrecke F angebracht werden.

Wesentliche Bedeutung kommt nun der induktionsarmen Kontaktierung der Bandleiterkondensatorplatten an die Elektroden zu. Die perspektivische Darstellung nach Fig. 3, die gleichzeitig ein Querschnittsbild vermittelt, zeigt, daß der Belag 1 des Kondensators $C_F$ mit zwei Fahnen f1 die die Schaltstrecke F umgreifende Elektrode $E_{F1}$ kontaktiert. Diese Elektrode $E_{F1}$ hat etwa einen E-förmigen Querschnitt mit den beiden äußeren Schenkeln e11, e11 und dem mittleren Schenkel e12. Als Material für die Elektroden $E_{F1}$, $E_{F2}$ der Schaltstrecke F wird eine hochtemperatur- und korrosionsbeständige Edelstrahllegierung verwendet, insbesondere eine Wolfram-Legierung. Für die Elektroden der Laserkammer werden halogenbeständige Metalle, z.B. Edelstahl oder Aluminium verwendet. All diejenigen Wandbereiche der Schaltstrecke F und der Laserkammer LK, die nicht von Elektrodenmaterial gebildet werden, sind mit temperaturbeständigem, UV-Strahlungsresistentem Kunststoff, z.B. PVDF (Polyvinylidenfluorid) oder einer hochreinen $Al_2O_3$-Keramik miteinander und mit den Elektroden verbunden, so daß im Inneren der Schaltstrecke F und der Laserkammer LK das darin befindliche Gasgemisch auf dem gewünschten Druck (in der Regel zwischen 50 mbar bis zu mehreren bar) gehalten werden kann. Die vorerwähnten isolierenden Wandteile sind in Fig. 3 mit $w_F$ für die Schaltstrecke F und mit $w_L$ für die Laserkammer LK bezeichnet. Die einzelnen Platten oder Folien für das Dielektrikum d stehen jeweils im Randbereich über die Beläge 1, 2, 3, 4 über, wie es die Kontur des Kondensatorpakets K verdeutlicht, damit Kreich- oder Überschlagsstrecken im Randbereich vermieden sind. Währand der Belag 1 des Kondensators $C_F$ in Fig. 3 mit stark ausgezogener Umrandung dargestellt ist, ist der Belag 2 innerhalb des Linienzuges 1 mit einem gestrichelten Linienzug 2 angedeutet; er ist durch eine Fahne f2 mit der Elektrode $E_{F2}$ der Funkenkammer F verbunden. Diese Elektrode $E_{F2}$ ist mit dem Wandteil $w_F$ verbunden. Bei der Kontaktierung ist darauf zu achten, daß diese möglichst induktionsarm durch gegenläufige Stromrichtung und geringen Abstand (bifilar) erfolgt. Der Kondensatorbelag 4 ist in Fig. 3 durch eine strichpunktierte Linie angedeutet; er ist mittels der Anschlußfahne f4 an die Elektrode $E_{L1}$ der Laserkammer LK kontaktiert, welche mit dem Wandteil $w_L$ verbunden ist. Die

andere Elektrode $E_{L2}$ der Laserkammer LK weist, spiegelbildlich zur Schaltstrecke F, ebenfalls einen etwa E-förmigen Querschnitt auf, mit den beiden äußeren Elektrodenschenkeln e21, e21 und dem mittleren Schenkel e22, welcher die eigentliche Elektrode $E_{L2}$ bildet und der Gegenelektrode $E_{L1}$ mit Abstand gegenüberliegt. An die beiden Elektrodenschenkel e21, 21 ist der Belag 1 des Kondensators $C_F$ mit den beiden Fahnen f1 kontaktiert. Anstelle der Doppelfahnenkontaktierung f1, f1 für die Elektrode $E_{F1}$ der Schaltstrecke F und die Elektrode $E_{L2}$ der Laserkammer LK könnte auch eine Einfachfahnenkontaktierung laseraxial verschoben zu den Fahnen f2, f4 im Innenbereich vorgesehen sein, jedoch ist die dargestellte Kontaktierung besonders induktionsarm und, wie man es sich aus dem Verlauf der Impulsströme während des Entladungsvorganges in der Schaltstrecke und in der Laserkammer verdeutlichen kann, zum großen Teil in gegenläufigen Schleifen, also bifilar.

Die Beläge 2, 3 der Kondensatoren $C_F$ und $C_K$ sind über breite als Pünkt symbolisierte Fahnen 23 miteinander leitend verbunden; anstelle dieser breitbandigen Verbindungsfahne könnten—wie erwähnt—die Beläge 2, 3 auch miteinander einstückig ausgeführt und in ihre Form gemäß Fig. 2 durch Falten gebracht sein. Die Beläge 2, 3 könnten aber auch aus einer einzigen Metallplatte gefertigt sein. Beim Aufbau des Kondensator-pakets ist darauf zu achten, daß die Beläge 2, 3 und 1 gegenüber der Elektrode $E_{L1}$ und die Beläge 2, 3 und 4 gegenüber der Elektrode $E_{L2}$ hochspannungsfest isoliert werden, so wie es durch das Dielektrikum d angedeutet ist. Darüber hinaus kann es zweckmäßig sein, den gesamten Kondensatorstapel in einen Öltank einzubringen oder in einen Wassertank (weiter unten erläutert).

Wie es Fig. 2 weiterhin zeigt, sind in Stapelrichtung des Kondensatorpakets jeweils einander benachbarte Kapazitätseinheiten $C_{F,K}$ mit ihren Belägen 1, 2, 3, 4 und ihren dielektrischen Schichten d spiegelbildlich in bezug auf eine zwischen den beiden Kapazitätseinheiten $C_{F,K}$ gedachte laserachsnormal verlaufende Symmetrieebene s,s angeordnet. Wie erwähnt, sind in Fig. 2 lediglich n=2 Kapazitätseinheiten $C_{F,K}$ dargestellt; wenn man sich zwei weitere Kapazitätseinheiten, also insgesamt n=4, in Fig. 2 dargestellt denkt, so wären die dritte und die vierte Kapazitätseinheit $C_{F,K}$ ebenfalls spiegelbildlich zueinander angeordnet usw. Dies hat zur Folge, daß die Beläge 4,4 die statisch und dynamisch auf gleichem Potential liegen, sich einander gegenüberliegen, so daß zwischen diesen beiden Beilägen eine Hochspannungsisolierung nicht erforderlich ist.

Fig. 3 zeigt, daß die Grundfläche der einzelnen Bandleiterkondensatoren $C_F$, $C_K$ bzw. der Kapazitätseinheiten $C_{F,K}$ im wesentlichen Rechteckform und demgemäß das Kondensatorpaket Ko etwa Quaderform besitzt und daß die Laserkammer LK und die zugehörigen Anschlußfahnen f1, f1; f4 an einer Längsseite l1 des Quaders angeordnet sind. Die Schaltstrecke F und die zugehörigen Elektroden $E_{F1}$, $E_{F2}$ und Anschlußfahnen f1, f1; f2 sind dann zweckmäßig an der anderen Längsseite l2 angeordnet.

Bei einer gemeinsamen Betrachtung der eine bevorzugte Ausführungsform darstellenden beiden Figuren 2 und 3 erkennt man also, daß die Laserkammer LK und die in diesem Falle als ausgedehnte Funkenstrecke ausgeführte schnelle Hochspannungsschaltstrecke F an einander gegenüberliegenden Längsseiten l1, l2 des Kondensatorpaketes K angeordnet sind und ein jeweils dem ersten und dem zweiten Bandleiterkondensator $C_F$, $C_K$ gemeinsamer Belag 2, 3 als etwa haarnadelförmig gebogenes Faltband so zwischen den anderen beiden Belägen 1 und 4 der Bandleiterkondensatoren $C_F$ und $C_K$ angeordnet ist, daß die eine Faltbandhälfte 2 dem Belag 1 direkt gegenüberliegt, der zwischen je einer Elektrode $E_{L2}$ der Laserkammer LK und $E_{F1}$ der Zündschaltstrecke der Schaltstrecke F angeschlossen ist. Die andere (zweite) Faltbandhälfte 3 liegt dem Belag 4 direkt gegenüber, der an die zweite Elektrode $E_{L1}$ der Laserkammer LK angeschlossen ist, wobei de Faltbandbelag 2, 3 mit seiner Faltbandhälfte 2 an die zweite Elektrode $E_{F2}$ der Schaltstrecke F angeschlossen ist. Im dargestellten Ausführungsbeispiel sind die Laserkammer LK und die Funkenkammer F im Wesentlichen rohrformig mit einem äußeren Rechteckquerschnitt ausgeführt. Von einer eingehenden Beschreibung der Laserkammer, z.B. der Vorionisierungs-Einrichtung, wird hier abgesehen, da zum Verständnis der Erfindung nicht erforderlich.

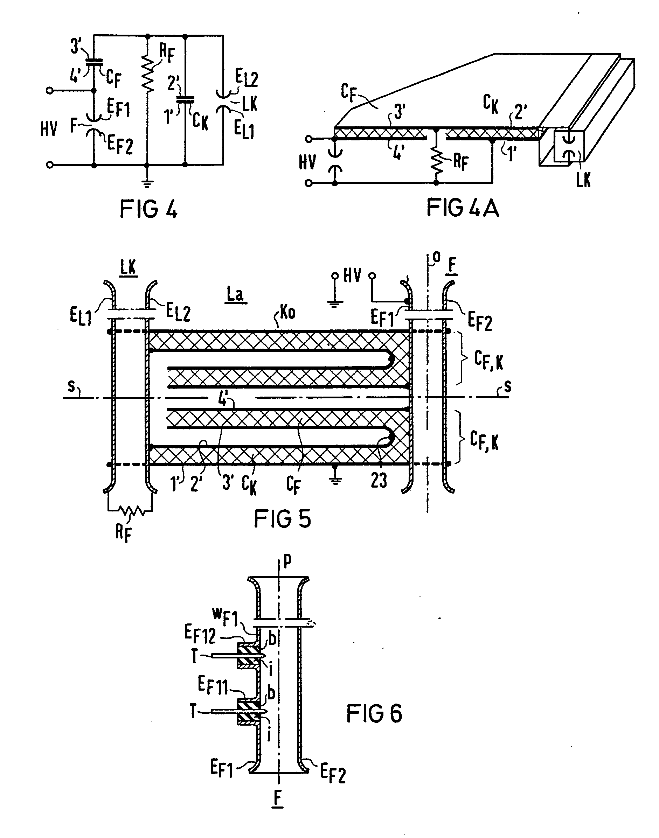

Dem zweiten Ausführungsbeispiel nach Fig. 5 liegt ein Charge-Transfer-Kreis als Schaltung zur Erzeugung der Laser-Anregungsimpulse zugrunde, Die zugehörige Schaltung, die an sich Stand der Technik ist, ist in Fig. 4 dargestellt. Zum besseren Verständis der Wirkungsweise dieser Schaltung nach Fig. 4 ist sie gemäß Fig. 4a in eine räumliche Bandleiteranordnung transponiert. Die Kondensatorbeläge sind mit der gleichen Numerierung wie in den Figuren 1, 1a und 2, allerdings unter Hinzufügung eines Striches, bezeichnet. Die gleichen Bezugszeichen tragen die Laserkammer LK, die Schaltstrecke F, in diesem Falle wieder als Funkenstrecke ausgebildet, und die ersten und zweiten Bandleiterkondensatoren $C_F$ und $C_K$. Man erkennt aus Figuren 4, 4a, daß bei dieser Schaltung der zweite Bandleiterkondensator $C_K$ parallel zu den Elektroden $E_{L1}$, $E_{L2}$ der Laserkammer LK geschaltet ist, daß parallel zum Kondensator $C_K$ ein hochohmiger Widerstand $R_F$ (an dessen Stelle auch eine Induktivität L verwendet sein könnte) geschaltet ist und daß parallel zum Widerstand $R_F$ die Reihenschaltung aus dem ersten Bandleiterkondensator $C_F$ und der Schaltstrecke F gelegt ist, wobei an die beiden Elektroden $E_{F1}$, $E_{F2}$ der Schaltstrecke F die Hochspannungsquelle HV angeschlossen ist mit ihrem hochliegenden Potential an der Elektrode $E_{F1}$ und mit ihrem Erdpotential an der Elektrode $E_{F2}$. Diese Schaltung arbeitet so, daß bei Zündung der Funkenstrecke F durch den Kondensator $C_F$ der Kondensator $C_K$ aufgeladen wird, welch letzterer wiederum in die Laserkammer LK die elektrische Energie einspeist.

Durch einen Vergleich der Figur 5 mit Figur 2 kann man feststellen, daß die räumliche Anordnung des Anregungssystems in Fig. 5 analog zu derjenigen nach Fig. 2 getroffen ist. Es wird deshalb von einer Detailbeschreibung dieses zweiten Ausführungsbeispiels wie auch von einer perspektivischen Darstellung abgesehen, da die räumliche Anordnung analog zu derjenigen nach Fig. 3 ist. Insbesondere ist bei der Fig. 5 die Anordnung auch so getroffen, daß die Laserkammer LK und die Schaltstrecke F an einander gegenüberliegenden Längsseiten des Kondensatorpaketes Ko angeordnet sind und ein jeweils dem ersten und dem zweiten Bandleiterkondensator $C_F$ bzw. $C_K$ gemeinsamer Belag 2', 3' als etwa haarnadelförmig gebogenes Faltband so zwischen den anderen beiden Belägen 1', 4' der Bandleiterkondensatoren $C_K$ und $C_F$ angeordnet ist, daß die eine Faltbandhäfte 2' dem Belag 1' direkt gegenüberliegt, der zwischen je einer Elektrode $E_{L1}$ der Laserkammer LK und $E_{F2}$ der Schaltstrecke F angeschlossen ist. Die zweite Faltbandhälfte 3' dagegen liegt dem Belag 4' direkt gegenüber, der an die zweite Elektrode $E_{F1}$ der Schaltstrecke F angeschlossen ist, wobei der gesamte Faltbandbelag 2', 3' und die zweite Elektrode $E_{L2}$ der Laserkammer LK angeschlossen ist. All das, was in bezug auf das erste Ausführungsbeispiel zur Anzahl n der Kapazitätseinheiten $C_{F,K}$ und zur spiegelbildlichen Anordnung gesagt wurde, gilt auch für dieses zweite Ausführungsbeispiel.

Von wesentlicher Bedeutung für die Vorrichtungen nach dem ersten und zweiten Ausführungsbeispiel und die weiter unten noch beschriebenen ist die schnelle Hochspannungsschaltstrecke F, für welche sich z.B. schnelle Einzelfunkenstrecken oder schnelle Thyratrons eignen, wie sie per se wohlbekannt aus der wissenschaftlichen und technischen Literatur sind. Die Vorrichtung nach der Erfindung sieht demgegenüber jedoch noch zusätzlich vor, die Induktivität der Schaltstrecke im Vergleich zu derjenigen einer Einzelfunkenstrecke oder eines Einzelthyratrons beträchtlich zu verringern, damit die erforderlichen extrem kurzen Schaltzeiten gewährleistet sind. Eine Maßnahme, die in diesem Sinne wirkt, ist in Fig. 6 schematisch dargestellt. Danach werden mehrere allgemein gesprochen n, Einzelfunkenstrecken der Schaltstrecke F zueinander parallel geschaltet. Die nicht aufgeteilte Gegenelektrode ist in Fig. 6 mit $E_{F2}$ bezeichnet, die Elektrode als Ganzes mit $E_{F1}$. Sie weist aber viele kleine Elektroden $E_{F11}$, $E_{F12}$ usw. auf. Hierzu sind n bohrungen b in Längsrichtung p der Schaltstrecke F hintereinanderliegend in die Elektrodenwand $w_{F1}$ eingebracht. In jede dieser Bohrungen b ist ein mittels der Isolierhülsen i isolierter Triggerstift T aus geeignetem Material (Edelstahl, Wolfram) eingeschraubt, so daß die Triggerstifte T hochspannungsmäßig gegen die Wand $w_{F1}$ isoliert sind. Die Einzelelektroden $E_{F11}$, $E_{F12}$ usw. bilden also kragenförmige Bereiche der Wand $w_{F1}$, die insgesamt die Elektrode $E_{F1}$ darstellt. Beim Betrieb der Schaltstrecke F wird an jeden der Triggerstifte T ein Hochspannungsimpuls kurzer Anstiegszeit gelegt, so daß ein Überschlag von dem Triggerstift zur Elektrode $E_{F1}$ bzw. zur jeweiligen Teilelektrode $E_{F11}$, $E_{F12}$ und zur Gegenelektrode $E_{F2}$ erfolgt. Durch diese getriggerte Vorentladung wird der Gasraum der Schaltstrecke vorionisiert und schlagartig die Hauptentladung von $E_{F1}$ zur Gegenelektrode $E_{F2}$ ausgelöst, wodurch die Schaltstrecke $E_{F1} .. E_{F2}$ leitend wird.

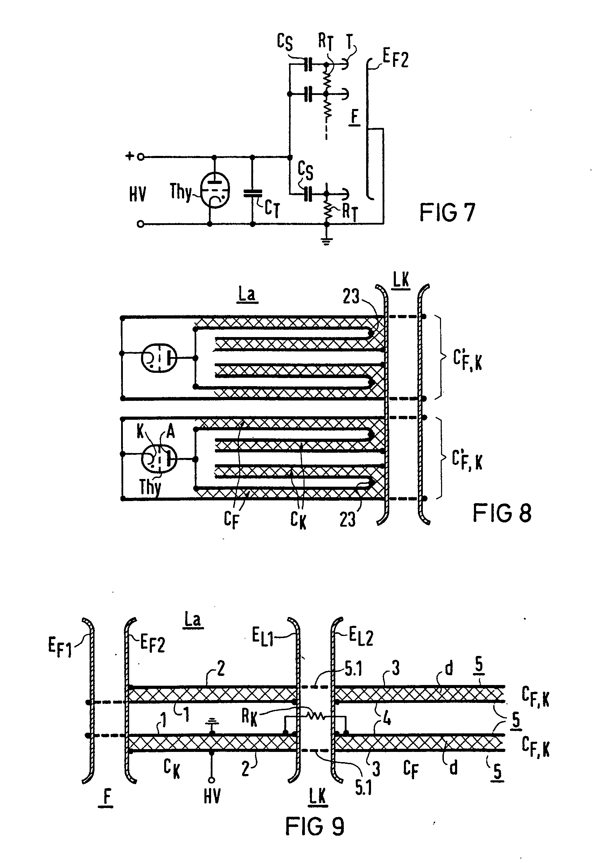

Der Hochspannungsimpuls, der die Schaltstrecke F nach Fig. 6 zündet, wird durch die Schaltung erzeugt, die in Fig. 7 dargestellt ist. Dabei sind die Triggerstifte T jeweils über Trigger-Kapazitäten $C_S$ an den hochliegenden Pol einer gemeinsamen Schaltkapazität $C_T$ angeschlossen und auf ihrer Trigger-Seite über Ausgleichs-Widerstände (oder -Induktivitäten) $R_T$ miteinander und mit Erdpotential verbunden. Parallel zur Schaltkapazität $C_T$ ist z.B. ein schnellschaltendes Thyratron oder eine Funkenstrecke zum Auslösen der Zündimpulse angeschlossen. An das Erdpotential ist auch die Gegenelektrode $E_{F2}$ der Schaltstrecke F angeschlossen. Die Strichelung in Fig. 7 deutet an, daß eine Vielzahl der T—$C_S$—$R_T$-Zweige zusätzlich zu den drei dargestellten vorgesehen sein kann. Die Triggerstifte T liegen über die Induktivitäten oder hochohmigen Widerstände $R_T$ auf gleichem Potential. Die Kondensatoren $C_S$ und $C_T$ sind auf hohe Spannung aufgeladen. Durch Zünden des Thyratrons Thy oder der Funkenstrecke wird auf die Triggerstifte T ein Hochspannungsimpuls mit steilem Anstieg gegeben, der zu einer gleichmäßigen Funkenbildung an allen Triggerstiften T und der gegenüberliegenden Elektrode $E_{F2}$ führt und damit zu einer gleichmäßigen Zündung und volumenmäßrigen Entladung der gesamten Schaltstrecke F.

Eine weitere Möglichkeit, dem Laser L eine Schaltstrecke F niedriger Induktivität zuzuordnen, besteht darin, n Thyratrons parallel zu schalten. Die Thyratrons müssen zu diesem Zweck alle gleichzeitig mit einem geeigneten Zündimpuls angesteuert werden. Das dritte Ausführungsbeispiel nach Fig. 8 zeigt, stark vereinfacht, in entsprechender Darstellung zu Figuren 2 und 5 den Aufbau eines Lasers in Blümlein-Schaltung mit n Thyratrons (von denen lediglich zwei gezeichnet sind) als Schaltstrecke. Jeweils n' Kondensatoren $C_F$ und $C_K$ (wobei n' ein ganzzahliges Vielfaches von n ist) sind zu einem Kondensatorteilstapel $C'_{F,K}$ zusammengefaßt, der jeweils von einem Thyratron geschaltet wird. Jeweils die Anoden und Kathoden der Thyratrons können leitend über Widerstände oder über Induktivitäten mit einander verbunden werden (nicht dargestellt). Im übrigen ist die Anordnung sinngemäß zu derjenigen nach Fig. 2 getroffen, weshalb zu Fig. 2 analoge Teile auch mit den gleichen Bezugszeichen versehen sind. Die Kondensatorteilstapel $C'_{F,K}$ umfassen jeweils zwei Kapazitätseinheiten $C_{F,K}$ nach fig. 2 (n'=2 n). Abhängig von der Kapazität der Bandleiterkondensatoren $C_{F,K}$ und demgemäß abhängig von der Schaltleistung könnte jedoch auch je ein Thyratron je einer Kapazitätseinheit $C_{F,K}$ (vgl. Fig. 2) zugeordnet sein.

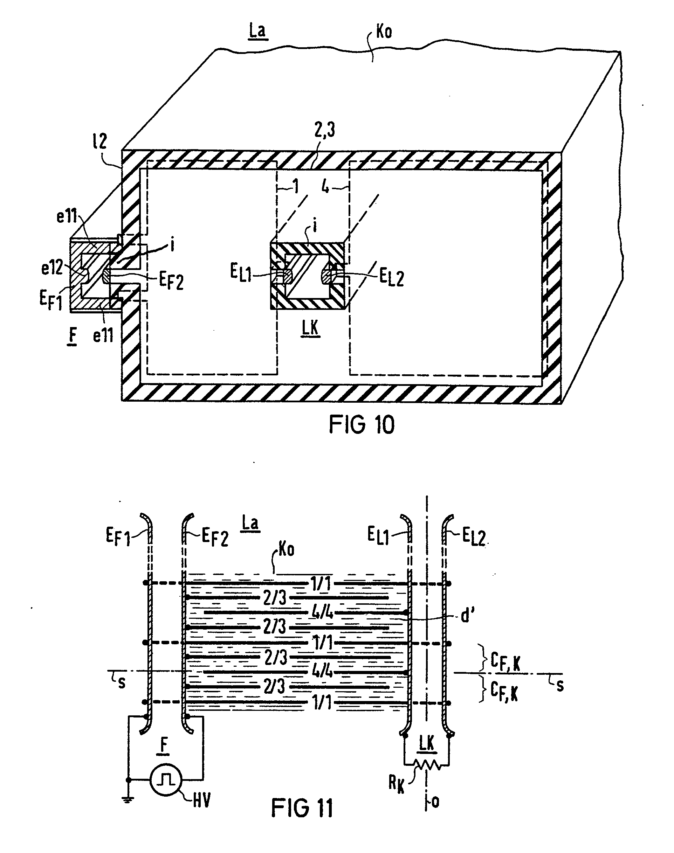

In Fig. 9 und 10 ist in entsprechender Darstellung zu Fig. 2 und 3 eine viertes Ausführungsbeispiel für ein Anregungssystem dargestellt, dem gleichfalls eine Blümlein-Schaltung zugrunde liegt. Diese Anordnung ermöglicht es unter anderem, eine größere Anzahl von Kondensatorplatten der Kondensatoren $C_F$ und $C_K$ pro Stapellänge unterzubringen, d.h. eine größere Anzahl im Vergleich zum Ausführungsbeispiel nach Fig. 2 und 3.

Dabei werden die ersten und zweiten Bandleiterkondensatoren $C_F$ und $C_K$ auf als Ganzes mit 5 bezeichneten Platten untergebracht, die jeweils Durchbrüche 5.1 zum hochspannungsisolierten Hindurchführen der Laserkammer LK aufweisen. Die Kammer für die schnelle Hochspannungsschaltstrecke F ist in Figuren 9 und 10 am linken Außenumfang bzw. an der linken Längsseite des Kondensatorpaketes laserachsparallel angeordnet.

In Fig. 10 ist der auf Hochspannungspotential liegende Belag der Kondensatoren $C_F$ und $C_K$ mit einer durchgezogenen Linie 2, 3 dargestellt. Die unter Zwischenlage des Dielektrikums d diesem Belag 2, 3 direkt gegenüberliegenden Beläge 1 und 4 sind in Fig. 10 gestrichelt dargestellt. Die Isolierschichten der Laserkammer LK und der Schaltstrecke F sind mit i bezeichnet; si dienen der Isolierung der Elektroden $E_{L1}$, $E_{L2}$ der Laserkammer und der Elektroden $E_{F1}$, $E_{F2}$ der Schaltstrecke F von denjenigen Belägen der Kondensatoren $C_F$, $C_K$, die jeweils nicht auf gleichem Potential liegen. Im übrigen sind in Figuren 9 und 10 funktionsmäßig gleiche Teile zu Figuren 2 und 3 auch mit den gleichen Bezugszeichen versehen. Die Laserkammer LK ist ersichtlich etwa mittig durch den Kondensatorstapel Ko hindurchgeführt. Auch hier ist der dargestellte Rechteckquerschnitt bzw. die Quaderform des Kondensatorstapels Ko vom Standpunkt der hohen Packungsdichte und der fertigungsgerechten Bauform besonders günstig; es ist indessen möglich, von der Rechteckform abweichende Querschnittsformen, also Vierecke, Ellipsen oder angenäherte Kreisformen als Querschnittsform zu wählen, wenn dies im Hinblick auf den speziellen Anwendungsfall vorteilhaft erscheint.

Statt in Blümlein-Schaltung kann das Ausführungsbeispiel nach Fig. 9 und 10 auch in Charge-Transfer-Schaltung eingesetzt werden. In bezug auf die schnelle Hochspannungsschaltstrecke F gilt entsprechend das, was bereits im Zusammenhang mit den ersten drei Ausführungsbeispielen ausgeführt wurde.

In Fig. 11 ist eine Ausführungsform in Anlehnung an Fig. 2 dargestellt, die eine weitere Steigerung der Energiedichte dadurch ermöglicht, daß als dielektrische Schicht d' Wasser verwendet wird. In diesem Fall können die bisher einzeln ausgeführten Beläge 1/1, 2/3 und 4/4 jeweils zu einer Platte zusammengefaßt werden. Als Plattenmaterial wird vorzugsweise ein korrosionsbeständiger Edelstahl verwendet. Da Wasser seine hohe Isolierfähigkeit nur wenige Mikrosekunden beibehält, wird die Hochspannungs - Gleichspannungsquelle HV durch eine Impuls-Ladevorrichtung ersetzt. Die Impulsdauer des Ladeimpulses muß klein sein im Vergleich zu der Zeit, die die Hochspannung zum Durchbruch durch die Wasser-Isolationsstrecke benötigen würde, und groß im Vergleich zur Entladezeit des gesamten Anregungssystems. Insbesondere wird der Kondensator $C_{F,K}$ bzw. Ko im Pulse-charging-Verfahren kurzzeitig, d.h. weniger als 10 $\mu s$, vor dem Zünden der Schaltstrecke aufgeladen. Im übrigen ist die Anordnung sinngemäß zu derjenigen nach Fig. 2 und 3. Die besonderen Vorteile der Ausführung nach Fig. 11 sind— abgesehen von dem höheren $\varepsilon$-Wert—die Möglichkeit der intensiveren Kühlung (Wasserkühlung!), die höhere Energiedichte und die Selbstheilenden Eigenschaften des Wasser-Dielektrikums.

In bevorzugter Ausführungsform arbeiten die dargestellten Anregungsstyeme als Hochenenergie-Excimer-Laser, da gerade die Excimer-Laser eine hohe Strahlungsausbeute bezogen auf die Anregungsenergie gewährleisten. Wie erwahnt, sind die Excimer-Laser z.B. in der Literaturstelle (4) näher beschrieben, so daß ihre Wirkungsweise und ihre Gaszusammensetzung im Rahmen der vorliegenden Anmeldung nicht näher erläutert zu werden braucht. Im Rahmen der Erfindung liegt auch die Verwendung des Anregungssystems für $CO_2$-, Cu-Dampf- oder $N_2$-Laser, weil man dadurch das Spektrum der Laserstrahlung verändern, d.h. verschiedenfarbiges Laserlicht im sichtbaren sowie im unsichtbaren (UV- und Infrarot-) Bereich erzeugen kann.

Weiterhin ist wegen der mit dem Erfindungsgegenstand eizeigbaren hohen Energiedichte eine der Vorrichtung nach der Erfindung analoge Vorrichtung hervorragend geeignet, Hochspannungsimpulse hoher Energie an 2 Elektroden anzulegen, insbesondere zwecks Erzeugung von Hochenenergieimpulsen bei Elektronenstrahlkanonen oder bei Marxgeneratoren.

## Patentansprüche

1. Vorrichtung zur Erzeugung schneller gepulster Entladungen in einem Laser (La), insbesondere an Hochenergielasern zur Erzeugung einer Lichtbogenfreien Kondensatorentladung zwischen den innerhalb der Laserkammer (LK) mit Abstand einander gegenüberliegenden Laser-Elektroden ($E_{L1}$, $E_{L2}$), deren einander gegenüberliegende Elektrodenflächen parallel zur optischen Achse (o) des Lasers verlaufen, mit ersten und zweiten Bandleiterkondensatoren ($C_F$, $C_K$) möglichst geringer Zuleitungs- und Eigeninduktivität zur Energiespeicherung, deren Beläge (1, 2, 3, 4; 1', 2', 3', 4'; 1/1, 2/3, 4/4) innerhalb eines pulserzeugenden Netzwerks zum Teil mit einer der Laser-Elektroden ($E_{L1}$, $E_{L2}$), zum Teil mit einer der Elektroden ($E_{F1}$, $E_{F2}$) einer Schnellen Hochspannungs-Schaltstrecke (F) und zum Teil sowohl mit einer Laser-Elektrode als auch mit einer Elektrode der schnellen Hochspannungs-Schaltstrecke (F) verbunden sind, wobei durch Zündung der Hochspannungs-Schaltstrecke (F) über das angeschlossene pulserzeugende Netzwerk die Hochspannungsimpulse an den Laser-Elektroden ($E_{L1}$, $E_{L2}$) erzeugbar sind, und wobei die Beläge der ersten und zweiten Bandleiterkondensatoren ($C_F$, $C_K$) und die dazwischenliegenden dielektrischen Schichten (d, d') im wesentlichen normal zur optischen Achse (o) des Lasers (La) verlaufen und im wesentlichen parallel zur optischen Achse des Lasers zu einem Kondensatorpaket (ko) gestapelt und über Anschlußverbindungen (f, f1, f2, f4) an die zugehörigen Elemente des pulserzeugenden Netzwerks angeschlossen sind, dadurch gekennzeichnet, daß

a) die zur Erzielung einer über die Laserlänge homogenen Kondensatorentladung nach der Art eines TEA-Lasers laserachsparallel ausgedehnten Elektroden ($E_{L1}$, $E_{L2}$) und die Elektroden ($E_{F1}$, $E_{F2}$; A, K) der zugehörigen Hochspannungs-Schaltstrecke (F) mit den Belägen der Bandleiterkondensatoren ($C_F$, $C_K$) so verbunden sind, daß in Stapelrichtung gesehen die einander benachbarten, jeweils einen ersten und einen zweiten Bandleiterkondensator ($C_F$, $C_K$) bildenden Kapazitätseinheiten ($C_{F,K}$) mit ihren Belägen (1, 2, 3, 4; 1', 2', 3', 4'; 1/1, 2/3, 4/4) und dielektrischen Schichten (d, d') spiegelbildlich in bezug auf eine zwischen den Kapazitätseinheiten ($C_{F,K}$) gedachte, laserachsnormal verlaufende Symmetrieebene (ss) angeordnet sind, und daß

b1) die einander zugewandten Beläge (1-1, 4-4; 1'-1', 4'-4') der benachbarten Kapazitätseinheiten ($C_{F,K}$) auf gleichem Potential liegen oder daß

b2) die einander zugewandten Beläge gleichen Potentials der benachbarten Kapazitätseinheiten ($C_{F,K}$) zu einer Kondensatorelektrode (1-1, 4-4) zusammengefaßt sind, deren Mittelebene mit der genannten Symmetrieebene (ss) übereinstimmt.

2. Vorrichtung nach Anspruch 1, dadurch gekennzeichnet, daß die Laserkammer (LK) mit ihren ausgedehnten sich laserachsparallel erstreckenden Elektroden ($E_{L1}$, $E_{L2}$) an seitlich aus den Kapazitätseinheiten ($C_{F,K}$) herausgeführte Anschlußfahnen (f1, f4) kontaktiert ist und daß die von den Kondensator-Belägen (1,4; 1', 2'; 1/1, 4/4) zu den Laser-Elektroden ($E_{L1}$, $E_{L2}$) führenden Strompfade

$$(f4—E_{L1}—e22—E_{L2}—e21—f1)$$

weitgehend bifilar, d. h. induktionsarm durch gegenläufige Stromrichtungen und geringen Abstand, verlaufen.

3. Vorrichtung nach Anspruch 1 oder 2, dadurch gekennzeichnet, daß der einen Längsseite des aus Kapazitätseinheiten ($C_{F,K}$) bestehenden Kondensatorpaketes (Ko) eine schnelle Hochspannungs-Schaltstrecke (F) zugeordnet ist, und daß die von den Kondensatorbelägen (1, 2; 1', 4'; 1/1, 2/3) zu den Elektroden ($E_{F1}$, $E_{F2}$; A, K) der Schaltstrecke (F) führenden Strompfade

$$(f2—E_{F2}—e12—E_{F1}—e11—f1)$$

weitgehend bifilar verlaufen.

4. Vorrichtung nach einem der Ansprüche 1 bis 3, dadurch gekennzeichnet, daß einander benachbarte, spiegelbildlich zueinander angeordnete Kapazitätseinheiten ($C_{F,K}$) zu Kondensatorteilstapeln ($C'_{F,K}$) zusammengefaßt sind und daß an die Kondensatorteilstapel ($C'_{F,K}$) jeweils Hochspannung-Schaltstrecken (Thy) angeschlossen sind.

5. Vorrichtung nach Anspruch 4, dadurch gekennzeichnet, daß bei n Kondensatorteilstapeln ($C'_{F,K}$) als schnelle Hochspannungs-Schaltstrecke n einander parallel geschaltete Thyratrons (Thy) vorgesehen sind, von denen je ein Thyratron je einem Kondensatorteilstapel ($C'_{F,K}$) zugeordnet ist (Fig. 8).

6. Vorrichtung nach einem der Ansprüche 1 bis 5, dadurch gekennzeichnet, daß die Grundfläche der einzelnen Bandleiterkondensatoren ($C_F$, $C_K$) bzw. Kapazitätseinheiten ($C_{F,K}$) im wesentlichen Rechteckform und demgemäß das Kondensatorpaket (Ko) etwa Quaderform besitzt und daß die Laserkammer (LK) und die zugehörigen Anschlußfahnen (f1, f4) an einer Längsseite des Quaders angeordnet sind.

7. Vorrichtung nach einem der Ansprüche 1 bis 4 oder 6, dadurch gekennzeichnet, daß die Laserkammer (LK) und eine schnelle Hochspannungsschaltstrecke (F) an einander gegenüberliegenden Längsseiten des Kondensatorpaketes (Ko) angeordnet sind und ein jeweils dem ersten und dem zweiten Bandleiterkondensator ($C_F$, $C_K$) gemeinsamer Belag (2, 3 bzw.

2', 3') als etwa haarnadelförmig gebogenes Faltband so zwischen den anderen beiden Belägen (1, 4 bzw. 1', 4') der Bandleiterkondensatoren ($C_F$, $C_K$) angeordnet ist, daß die eine Faltbandhälfte (2 bzw. 2') dem Belag direkt gegenüberliegt, der zwischen je einer Elektrode ($E_{L2}$, $E_{L1}$) der Laserkammer (LK) und ($E_{F1}$ bzw. $E_{F2}$) der Schaltstrecke (F) angeschlossen ist, und die andere (zweite) Faltbandhälfte (3 bzw. 3') dem Belag (4 bzw. 4') direkt gegenüberliegt, der an die zweite Elektrode ($E_{L1}$) der Laserkammer bzw. ($E_{F1}$) der Schaltstrecke (F) angeschlossen ist, wobei der Faltbandbelag (2, 3 bzw. 2', 3') an die zweite Elektrode ($E_{F2}$) der Schaltstrecke bzw. ($E_{L2}$) der Laserkammer angeschlossen ist (Fig. 2 bzw. 5).

8. Vorrichtung nach einem der Ansprüche 1 bis 4 sowie 6 und 7, dadurch gekennzeichnet, daß als Hochspannungs-Schaltstrecke eine rohrförmige Funkenstrecke (F) mit ihren Elektroden ($E_{F1}$, $E_{F2}$) laserachsparallel verlaufend auf der der Laserkammer (LK) abgewandten Seite des Kondensatorpaketes (Ko) angeordnet und an seitlich herausgeführte Anschluß fahnen (f1, f2) der zugehörigen Kondensatorbeläge (1, 2 bzw. 1', 2' bzw. 1/1, 2/3) angeschlossen ist.

9. Vorrichtung nach einem der Ansprüche 1 bis 8, gekennzeichnet durch eine Blümlein-Schaltung als pulserzeugendes Netzwerk (Fig. 1).

10. Vorrichtung nach einem der Ansprüche 1 bis 8, gekennzeichnet durch einen "Charge-Transfer"-Kreis als pulserzeugendes Netzwerk (Fig. 4).

11. Vorrichtung nach einem der Ansprüche 1 bis 4 sowie 6, 7 und 9, 10 mit einer rohrförmigen Funkenstrecke als schnelle Hochspannungsschaltstrecke, dadurch gekennzeichnet, daß in über die Länge der Funkenstrecke (F) verteilt angeordnete achsnormale Elektroden-Bohrungen (b) jeweils Triggerstifte (T) isoliert eingesetzt sind, an welche Hochspannungszündimpulse legbar sind (Fig. 6).

12. Vorrichtung nach Anspruch 11, dadurch gekennzeichnet, daß die Triggerstifte jeweils über Trigger-Kapazitäten ($C_S$) an den hochliegenden Pol einer gemeinsamen Schaltkapazität ($C_T$) angeschlossen und auf ihrer Trigger-Seite über für hochfrequente Ströme hochohmige Ausgleichs-Widerstände oder -Induktivitäten ($R_T$) miteinander und mit Erdpotential verbunden sind, wobei parallel zur Schaltkapazität ($C_T$) ein schnell schaltendes Thyratron oder eine schnell schaltende Funkenstrecke zum Auslösen des Zündimpulses angeschlossen ist (Fig. 7).

13. Vorrichtung nach Anspruch 1, dadurch gekennzeichnet, daß die Beläge für die ersten und zweiten Bandleiterkondensatoren ($C_F$, $C_K$) mit einem Durchbruch für die Laserkammer (LK) versehen sind und die Laserkammer innerhalb dieses Durchbruches, die schnelle Hochspannungsschaltstrecke (F) dagegen am Außenumfang der Kondensatorbeläge (1, 2, 3, 4) laserachsparallel angeordnet ist (Fig. 9, 10).

14. Vorrichtung nach einem der Ansprüche 1 bis 4 sowie 6 bis 13, dadurch gekennzeichnet, daß die nicht vom Elektrodenmaterial gebildeten isolierenden Wandbereiche ($w_L$, $w_F$, i) der Laserkammer (LK) und/oder der Schaltstrecke (n) (F), die miteinander und mit den Laser-Elektroden ($E_{L1}$, $E_{L2}$) bzw. mit den Elektroden ($E_{F1}$, $E_{F2}$) der Schaltstrecke (n) (F) verbunden sind, aus einem temperaturbeständigen, UV-strahlungsresistenten Kunststoff bestehen.

15. Vorrichtung nach einem der Ansprüche 1 bis 4 sowie 6 bis 13, dadurch gekennzeichnet, daß das Wandmaterial der Laserkammer (LK) und/oder der als ausgedehnte Funkenstrecke ausgeführten Hochspannungs-Schaltstrecke (F) eine reine $Al_2O_3$-Keramik mit einem Reinheitsgrad von mindestens 95%, insbesondere mindestens 99%, ist.

16. Vorrichtung nach einem der Ansprüche 1 bis 13, dadurch gekennzeichnet, daß als Dielektrikum eine Flüssigkeit, vorzugsweise chemisch reines Wasser, verwendet ist und die jeweils auf gleichem Potential liegenden Kondensator-Beläge (1, 1 bzw. 2, 3 bzw. 4, 4) zu Metallplatten (1/1, 2/2, 4/4) vereinigt sind, welche in das flüssige Dielektrikum eintauchen (Fig. 11).

**Revendications**

1. Dispositif pour la production de décharges pulsées rapides dans un laser (La), plus particulièrement pour des lasers à haute énergie pour produire une décharge de condensateur sans arc entre les électrodes laser ($E_{L1}$, $E_{L2}$) se situant à une certaine distance entre elles dans la chambre de laser (LK), et dont les surfaces des électrodes, qui se situent mutuellement en face l'une de l'autre, s'étendant parallèlement à l'axe optique (o) du laser, avec des premiers et des seconds condensateurs ($C_F$, $C_K$) à conducteurs en rubans, possédant une inductance d'entrée et une inductance propre aussi faibles que possible pour l'accumulation d'énergie, et dont les armatures (1, 2, 3, 4; 1', 2', 3', 4'; 1/1, 2/3, 4/4) sont reliées, dans un réseau produisant des impulsions, en partie avec une des électrodes-laser ($E_{L1}$, $E_{L2}$), en partie avec une des électrodes ($E_{F1}$, $E_{F2}$) d'une voie de commutation rapide et de haute tension, et en partie aussi bien avec une électrode-laser qu'avec une électrode de la voie de commutation rapide de haute tension (F), la réalisation étant telle que par l'amorçage de la voie de commutation rapide de haute tension (F) et par l'intermédiaire du réseau produisant les impulsions et qui est branché, les impulsions haute tension sont susceptibles d'être produites au niveau des électrodes-laser ($E_{L1}$, $E_{L2}$) et que les armatures des premiers et seconds condensateurs à conducteurs en rubans ($C_F$, $C_K$) et les couches diélectriques (d, d') qui se trouvent entre ces condensateurs, s'étendent essentiellement suivant une direction normale à l'axe optique (o) du laser (La) et sont empilées sensiblement parallèlement à l'axe optique du laser pour former un paquet de condensateurs (ko), et sont reliées par l'intermédiaire de liaisons de raccordement (f, f1, f2, f4) aux éléments associés du réseau produisant les impulsions, caractérisé par le fait que

a) les électrodes ($E_{L1}$, $E_{L2}$) qui s'étendent parallèlement à l'axe du laser pour l'obtention d'une décharge homogène sur la longueur du laser, à la manière d'un laser TEA et les électrodes ($E_{F1}$, $E_{F2}$; A, K) de la voie de commutation haute tension (F), sont reliées de telle manière aux armatures des condensateurs à conducteurs en rubans ($C_F$, $C_K$) que, si l'on regarde dans la direction de la pile, les armatures (1, 2, 3, 4; 1', 2', 3', 4'; 1/1, 2/3, 4/4) des unités de capacité ($C_F$, $C_K$) voisines et constituant respectivement un premier et un second condensateurs à conducteurs en rubans et les couches diélectriques (d, d') sont disposées symétriquement par rapport à un plan de symétrie (ss) s'étendant normalement à l'axe du laser et supposé se situer entre les unités de capacité ($C_F$, $C_K$), et que
b1) les armatures (1-1, 4-4; 1'-1', 4'-4') qui se font face et qui appartiennent à des unités de capacité voisines ($C_F$, $C_K$) sont à un même potentiel, ou que
b2) les armatures qui se font face, de même potentiel, et qui appartiennent à des unités de capacités voisines ($C_F$, $C_K$) sont rassemblées en une électrode de condensateur (1-1, 4-4), dont le plan médian coïncide avec ledit plan de symétrie (ss).

2. Dispositif selon la revendication 1, caractérisé par le fait que la chambre de laser (LK) est contactée, par ses électrodes étendues ($E_{L1}$, $E_{L2}$) qui sont parallèles à l'axe du laser, à des languettes de raccordement (f1, f4) qui sortent latéralement des unités de capacité ($C_F$, $C_K$) et que les pistes conductrices

$$(f4\text{---}E_{L1}\text{---}e22\text{---}E_{L2}\text{---}e21\text{---}f1)$$

qui mènent des armatures des condensateurs (1, 4; 1', 2'; 1/1, 4/4) aux électrodes de laser ($E_{L1}$, $E_{L2}$), sont largement bifilaires, c'est-à-dire s'étendent avec une faible induction par suite de directions opposées du courant et de la faible distance.

3. Dispositif selon la revendication 1 ou 2, caractérisé par le fait qu'à l'un des côtés longitudinaux du paquet de condensateurs (Ko) constitués par des unités de capacité ($C_F$, $C_K$) est associée une voie de commutation haute tension (F) et que les pistes de courant

$$(f2\text{---}E_{F2}\text{---}e12\text{---}E_{F1}\text{---}e11\text{---}f1)$$

qui mènent des armatures des condensateurs (1, 2; 1', 4'; 1/1, 2/3) aux électrodes ($E_{F1}$, $E_{F2}$; A, K) de la voie de commutation (F), s'étendent largement de façon bifilaire.

4. Dispositif selon l'une des revendications 1 à 3, caractérisé par le fait que des unités de capacité ($C_F$, $C_K$) qui sont voisines entre elles et qui sont disposées symétriquement l'une par rapport à l'autre, sont rassemblées en piles de condensateurs ($C'_{F,K}$), et qu'à la pile de condensateurs ($C'_{F,K}$) sont respectivement reliées des voies de commutation haute tension (Thy).

5. Dispositif selon la revendication 4, caractérisé par le fait que dans le cas de n piles partielles de condensateurs ($C'_{F,K}$) sont prévus, en tant que voies de commutation rapides de haute tension, n thyratrons (Thy) montés en parallèle entre eux, parmi lesquels un thyratron est associé à chaque pile partielle de condensateurs ($C'_{F,K}$) (figure 8).

6. Dispositif selon l'une des revendications 1 à 5, caractérisé par le fait que la surface de base des différents condensateurs à conducteurs en forme de rubans ($C_F$, $C_K$) ou unités de capacité ($C_F$, $C_K$), possède essentiellement une forme rectangulaire et que par conséquent le paquet de condensateur (Ko) possède sensiblement la forme d'une parallélépipède, et que la chambre de laser (LK) et les languettes de raccordement associées (f1, f4) sont disposées sur un côté longitudinal du parallélépipède.

7. Dispositif selon l'une des revendications 1 à 4 ou 6, caractérisé par le fait que la chambre de laser (LK) et une voie de commutation rapide de haute tension (F) sont disposées sur des côtés longitudinaux opposés du paquet de condensateurs (Ko) et une armature commune (2, 3 ou 2', 3') qui est commune aux premiers et aux seconds condensateurs à conducteurs en forme de rubans ($C_F$, $C_K$) est disposée, sous la forme d'une ruban en accordéon repliée à la manière d'une épingle à cheveux, et cela de telle manière entre les deux autres armatures (1, 4 et 1', 4') des condensateurs à conducteurs en forme de ruban ($C_F$, $C_K$) qu'une moitié du ruban plié en accordéon (2, 2') se situe directement en face de l'armature qui est reliée entre respectivement une électrode ($E_{L2}$, $E_{L1}$) de la chambre de laser (LK) et ($E_{F1}$ et $E_{F2}$) de la voie de commutation (F), alors que l'autre (la seconde) moitié du ruban plié en accordéon (3, 3') se situe directement en face de l'armature (4, 4'), qui est reliée à la seconde électrode ($E_{L1}$) de la chambre de laser ou ($E_{F1}$) de la voie de commutation (F), l'armature en ruban plié en accordeon (2, 3, ou 2', 3') étant reliée à la seconde électrode ($E_{F2}$) de la voie de commutation ou ($E_{L2}$) de la chambre de laser (figures 2 et 5).

8. Dispositif selon l'une des revendications 1 à 4 ainsi que 6 et 7, caractérisé par le fait qu'en tant que voie de commutation haute tension, une voie de décharge de forme tubulaire (F) est disposée, avec ses électrodes ($E_{F1}$, $E_{F2}$) s'étendant parallèlement à l'axe du laser, sur le côté du paquet de condensateurs (Ko) qui est éloigné de la chambre de laser (LK) et qui est relié à des languettes de branchement (f1, f2) des armatures de condensateurs associées (1, 2 ou 1', 2' ou 1/1, 2/3) s'étendant latéralement.

9. Dispositif selon l'une des revendications 1 à 8, caractérisé par un circuit-Blümlein en tant que réseau produisant des impulsions (figure 1).

10. Dispositif selon l'une des revendications 1 à 8, caractérisé par un circuit dit à "transfert de charge" en tant que réseau produisant des impulsions (figure 4).

11. Dispositif selon l'une des revendications 1 à 4 ainsi que 6, 7 et 9, 10, avec une voie à décharge tubulaire en tant que voie de commutation rapide de haute tension, caractérisé par le fait que l'on insère, dans des perçages d'électrodes (b) normaux à l'axe et répartis sur la longueur de la voie de décharge (F), respectivement des chevilles de déclenchement (T) montées de façon isolée et auxquelles sont susceptibles d'être appliquées des impulsions de déclenchement de haute tension (figure 6).

12. Dispositif selon la revendication 11, caractérisé par le fait que les chevilles de déclenchement sont reliées, respectivement par l'intermédiaire de capacités de déclenchement ($C_S$), aux pôles situés à un niveau élevé, d'une capacité de commutation commune ($C_T$), et que sur leurs côté de déclenchement, et par l'intermédiaire de courant de haute fréquence, sont reliées des résistances de compensation ou d'inductance ($R_T$) fortement ohmiques, elles sont reliées entre elles et au potentiel de terre, la réalisation étant telle qu'en parallèle sur la capacité de commutation ($C_T$) un thyratron à commutation rapide ou une voie de décharge à commutation rapide, est relié pour le déclenchement d'une impulsion d'allumage (figure 6).

13. Dispositif selon la revendication 1, caractérisé par le fait que les armatures pour les premiers et les seconds condensateurs à conducteurs en form de rubans ($C_F$, $C_K$) sont pourvus d'une ouverture pour la chambre de laser (LK), et la chambre de laser est disposée à l'intérieur de cette ouverture, alors que la voie de commutation rapide haute tension (F) est prévue, par contre, à la périphérie des armatures de condensateurs (1, 2, 3, 4), parallèlement à l'axe du laser (figures 9, 10).

14. Dispositif selon l'une des revendications 1 à 4, de même que 6 à 13, caractérisé par le fait que les zones de paroi isolantes ($w_L$, $w_F'$, i) de la chambre de laser (LK), qui ne sont pas formées par le matériau d'électrode, et/ou de la voie de commutation ou des voies de commutation (F), qui sont reliées entre elles et avec les électrodes-lasers ($E_{L1}$, $E_{L2}$) ou avec les électrodes ($E_{F1}$, $E_{F2}$) de la ou des voies de commutation (F), sont constituées par une matière plastique résistance à la température et au rayonnement UV.

15. Dispositif selon l'une des revendications 1 à 4, de même que 6 à 13, caractérisé par le fait que le matériau constituant la paroi de la chambre de laser (LK) et/ou la voie de commutation haute tension (F) réalisée sous la forme d'une voie de décharge étendue, est une céramique pure en $Al_2O_3$ avec un degré de pureté d'au moins 95%, en particulier au moins 99%.

16. Dispositif selon l'une des revendications 1 à 13, caractérisé par le fait qu'on utilise, en tant que diélectrique, un liquide, de préférence de l'eau chimiquement pure et que les armatures des condensateurs (1, 1 ou 2, 3 ou 4, 4) qui sont portées au même potentiel, sont assemblées en plaques métalliques (1/1, 2/2, 4/4) qui plongent dans le diélectrique liquide (figure 11).

## Claims

1. Apparatus for the production of fast pulsed discharges in a laser (La), in particular in high energy lasers for the production of an arc-free capacitor discharge between the laser electrodes ($E_{L1}$, $E_{L2}$) which are spaced opposite one another within the laser chamber (LK) and whose electrode surfaces, which face one another, run parallel to the optical axis (o) of the laser, with first and second strip conductor capacitors ($C_F$, $C_K$) which possess the lowest possible lead inductance and natural inductance to store energy, and whose coatings (1, 2, 3, 4; 1', 2', 3', 4'; 1/1, 2/3, 4/4) are connected within a pulse-generating network, part to one of the laser electrodes ($E_{L1}$, $E_{L2}$), part to one of the electrodes of a fast high-voltage switching path (F), and part both to a laser electrode and to an electrode of the fast high-voltage switching path (f), where through the ignition of the high-voltage switching path (F) via the connected pulse-generating network the high-voltage pulses can be produced across the laser electrodes ($E_{L1}$, $E_{L2}$), and where the coatings of the first and second strip conductor capacitors ($C_F$, $C_K$) and the intermediate dielectric layers (d, d') fundamentally run at right angles to the optical axis (o) of the laser (La), and are stacked to form a capacitor stack (ko) basically parallel to the optical axis of the laser and are connected via terminal connections (f, f1, f2, f4) to the associated elements of the pulse-generating network, characterised in that

a) the electrodes ($E_{L1}$, $E_{L2}$) extending parallel to the laser axis to produce an homogenous capacitor discharge along the length of the laser, in the manner of a TEA-laser, together with the electrodes ($E_{F1}$, $E_{F2}$; A, K) of the associated high-voltage switching path (F) are so connected to the coatings of the strip conductor capacitors ($C_F$, $C_K$) that, considered in the direction of stacking, the capacitance units ($C_{F,K}$) which are adjacent to one another and which each form a first and a second strip conductor capacitor ($C_F$, $C_K$) are arranged so that their coatings (1, 2, 3, 4; 1', 2', 3', 4'; 1/1, 2/3, 4/4) and dielectric layers (d, d') form a mirror image relative to an imaginary plane of symmetry (ss) which lies between the capacitance units ($C_{F,K}$) and runs at right angles to the laser axis, and that

b1) the coatings (1-1, 4-4; 1'-1', 4'-4') of the adjacent capacitance units ($C_{F,K}$) which face one another, carry the same potential or that

b2) the like potential coatings facing one another, of the adjacent capacitance units ($C_{F,K}$) are combined to form a capacitor electrode (1-1, 4-4) whose central plane is identical to the aforementioned plane of symmetry (ss).

2. Apparatus as claimed in Claim 1, characterised in that the laser chamber (LK) is contacted by its extended electrodes ($E_{L1}$, $E_{L2}$), which run parallel to the laser axis, to connection lugs (f1, f4) which lead out from the sides of the capacitance units ($C_{F,K}$) and that the current paths

$$(f4—E_{L1}—e22—E_{L2}—e21—f1)$$

which lead from the capacitor coatings (1, 4; 1', 2'; 1/1, 4/4) to the laser electrodes ($E_{L1}$, $E_{L2}$) are arranged in a fundamentally bifilar fashion, i.e. with low inductance as a result of opposing current directions and narrow spacing.

3. Apparatus as claimed in Claim 1 or 2, characterised in that one longitudinal side of the capacitor stack (Ko) which consists of capacitance units ($C_{F,K}$) is assigned a fast high-voltage switching path (F), and that the current paths

$$(f2—E_{F2}—e12—E_{F1}—e11—f1)$$

which lead from the capacitor coatings (1, 2; 1', 4'; 1/1, 2/3) to the electrodes ($E_{F1}$, $E_{F2}$; A, K) of the switching path (F) are arranged to be substantially bifilar.

4. Apparatus as claimed in one of the Claims 1 to 3, characterised in that capacitance units ($C_{F,K}$) which are adjacent and form a mirror image with respect to one another are combined to form capacitor sub-stacks ($C'_{F,K}$), and that the capacitor sub-stacks ($C'_{F,K}$) are each connected to high-voltage switching paths (Thy).

5. Apparatus as claimed in Claim 4, characterised in that where n capacitor sub-stacks ($C'_{F,K}$) are provided, the fast high-voltage switching path consists of n thyratrons (Thy) connected in parallel to one another, where each thyratron is assigned to a capacitor sub-stack ($C'_{F,K}$) (Figure 8).

6. Apparatus as claimed in one of the Claims 1 to 5, characterised in that the base surface of the individual strip conductor capacitors ($C_F$, $C_K$) or capacitance units ($C_{F,K}$) are basically rectangular in shape and accordingly the capacitor stack (Ko) has the shape of a parallelepiped, and that the laser chamber (LK) and the associated connection lugs (f1, f4) are arranged along a longitudinal side of the parallelepiped.

7. Apparatus as claimed in one of the Claims 1 to 4 or 6, characterised in that the laser chamber (LK) and a fast high-voltage switching path (F) are arranged on opposite longitudinal sides of the capacitor stack (Ko) and a coating (2, 3 or 2', 3' as the case may be) common to the first and second strip conductor capacitor ($C_F$, $C_K$) is arranged as a folded strip bent in an approximately hairpin formation, between the other two coatings (1, 4 or 1', 4' as the case may be) of the strip conductor capacitors ($C_F$, $C_K$) in such manner that one half of the folded strip (2 or 2' as the case may be) lies directly opposite the coating which is connected between one electrode ($E_{L2}$, $E_{L1}$) of the laser chamber (LK) and one electrode ($E_{F1}$ or $E_{F2}$ as the case may be) of the switching path (F), and the other (second) half of the folded strip (3 or 3' as the case may be) lies directly opposite that coating (4 or 4' as the case may be) which is connected to the second electrode ($E_{L1}$) of the laser chamber or ($E_{F1}$) of the switching path (F) as the case may be, where the folded strip coating (2, 3 or 2', 3' as the case may be) is connected to the second electrode ($E_{F2}$) of the switching path or ($E_{L2}$) of the laser chamber as the case may be (Fig. 2 and 5).

8. Apparatus as claimed in one of the Claims 1 to 4 and 6 and 7, characterised in that the high-voltage switching path consists of a tubular spark gap (F) arranged with its electrodes ($E_{F1}$, $E_{F2}$) running parallel to the laser axis on that side of the capacitor stack (Ko) which faces away from the laser chamber (LK), and is connected to connection lugs (f1, f2) which lead out from the sides of the associated capacitor coatings (1, 2, or 1', 2' or 1/3, 2/3 as the case may be).

9. Apparatus as claimed in one of the Claims 1 to 8, characterised by a Blümlein circuit as a pulse generating network (Figure 1).

10. Apparatus as claimed in one of the Claims 1 to 8, characterised by a charge-transfer circuit as a pulse generating network (Figure 4).

11. Apparatus as claimed in one of the Claims 1 to 4 and 6, 7 and 9, 10, with a tubular spark gap as a fast high-voltage switching path, characterised in that trigger pins (T), to which high-voltage ignition pulses can be connected, are inserted in insulated fashion in electrode bores (b) normal to the axis distributed over the length of the spark gap (F) (Figure 6).

12. Apparatus as claimed in Claim 11, characterised in that the trigger pins are each connected via trigger capacitances ($C_S$) to the high pole of a common switching capacitance ($C_T$) and on their trigger side are connected to one another and to earth potential via compensating resistors or inductances ($R_T$), which are high-ohmic for high-frequency currents, where a fast switching thyratron or a fast switching spark gap which serves to trigger the ignition pulse is connected parallel to the switching capacitance ($C_T$) (Figure 7).

13. Apparatus as claimed in Claim 1, characterised in that the coatings for the first and second strip conductor capacitors ($C_S$, $C_K$) are provided with an opening for the laser chamber (LK) and the laser chamber is arranged within this opening whereas the fast high-voltage switching path (F) is arranged at the outer periphery of the capacitor coatings (1, 2, 3, 4) parallel to the laser axis (Fig. 9, 10).

14. Apparatus as claimed in one of the Claims 1 to 4 and 6 to 13, characterised in that the insulated wall zones ($w_L$, $w_F$, i) of the laser chamber (LK) and/or of the switching path(s) (F) which are not formed by the electrode material and which are connected to one another and to the laser electrodes ($E_{L1}$, $E_{L2}$) or the electrodes ($E_{F1}$, $E_{F2}$) of the switching paths (F) as the case may be, consist of a heat-resistant, UV-radiation-resistant synthetic resin material.

15. Apparatus as claimed in one of the Claims 1 to 4 and 6 to 13, characterised in that the wall material of the laser chamber (LK) and/or of the high-voltage switching path (F) formed as an extended spark gap is a pure $Al_2O_3$ ceramic having a degree of purity of at least 95% and in particular at least 99%.

16. Apparatus as claimed in one of the Claims 1 to 13, characterised in that the dielectric consists of a liquid, preferably chemically purified water, and the capacitor coatings which each carry equal potential (1, 1 or 2, 3 or 4, 4 as the case may be) are combined to form metal plates (1/1, 2/2, 4/4) which are submerged in the liquid dielectric (Fig. 11).

FIG 1

FIG 1A

FIG 2

FIG 3

FIG 4

FIG 4A

FIG 5

FIG 6

2

FIG 7

FIG 8

FIG 9

FIG 10

FIG 11

4